(19) Europäisches Patentamt / European Patent Office / Office européen des brevets

(11) **EP 3 173 672 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(51) Int Cl.:
**F16K 1/38** (2006.01)     **F16K 15/04** (2006.01)
**F16K 31/06** (2006.01)

(21) Anmeldenummer: **16197079.3**

(22) Anmeldetag: **03.11.2016**

(54) **PROPORTIONALVENTIL**

PROPORTIONAL VALVE

VALVE PROPORTIONNELLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.11.2015 AT 5021315 U**

(43) Veröffentlichungstag der Anmeldung:
**31.05.2017 Patentblatt 2017/22**

(73) Patentinhaber: **MSG Mechatronic Systems GmbH**
**8551 Wies (AT)**

(72) Erfinder:
• **LAMPL, Ewald**
**8551 Wies (AT)**
• **KRAUTBERGER, Franz**
**8551 Wies (AT)**
• **SCHÖNER, Gerhard**
**8530 Deutschlandsberg (AT)**

(74) Vertreter: **Schwarz & Partner Patentanwälte OG**
**Patentanwälte**
**Wipplingerstraße 30**
**1010 Wien (AT)**

(56) Entgegenhaltungen:
**EP-A1- 1 654 148**     **WO-A1-2006/122610**
**DE-A1- 10 245 832**     **DE-A1-102012 204 104**
**FR-A- 891 300**     **US-A- 4 011 891**
**US-A1- 2012 011 997**

**Beschreibung**

Die Erfindung betrifft ein Proportionalventil.

Es sind allgemein Proportionalventile zur Regelung von Gasen bekannt, bei welchen über den zu einer Spule zugeführten Spulenstrom die Durchflussmenge durch das Proportionalventil gesteuert wird.

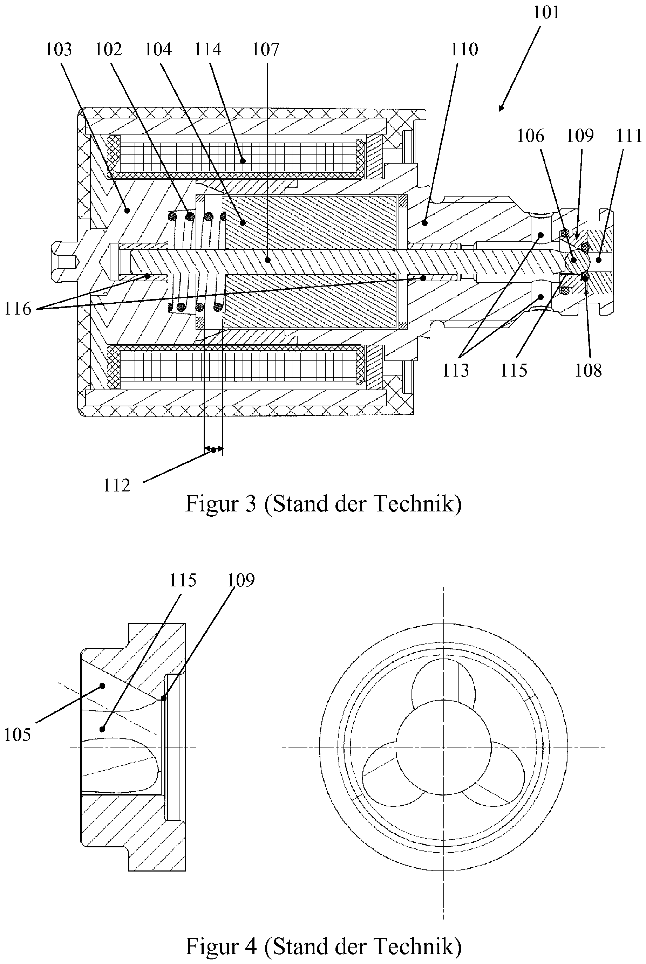

Figur 3 zeigt ein Beispiel eines solchen aus dem Stand der Technik bekannten Proportionalventils 101 zur Regelung von Gasen, bei welchem eine Feder 102 abstützend an einem Polkern 103 auf einen Anker 104 wirkt, der wiederum einen Verschluss mittels eines mit ihm verbundenen Auslöseelements 107 gegen ein Dichtelement 108 drückt und eine Öffnung 109 verschließt. Der Verschluss ist in dieser Ausführungsvariante durch eine Kugel 106 gebildet, die axial verschieblich in einer Kugelführung 115 in einem mehrteiligen rohrförmigen Gehäuse 110 gelagert ist. Das Auslöseelement 107 ist axial verschieblich entlang eines Verschiebeweges 112 in Führungen 116 in dem rohrförmigen Gehäuse 110, bzw. im Polkern 103 gelagert. Die Kugelführung 115 weist Ausnehmungen 105 auf, die in Figur 4 im Detail dargestellt sind. An einem Ende des rohrförmigen Gehäuses 110 ist ein Gaseingang 111 ausgebildet, der bei geöffneter Öffnung 109 mit den an der Längsseite des Gehäuses 110 radial angeordneten Gasausgängen 113 kommuniziert. Während des Betriebs des Proportionalventils 101 drückt der am Gaseingang 111 herrschende Druck des Gases die Kugel 106 stetig gegen die Stirnfläche des Auslöseelements 107, wodurch durch Verschieben des Auslöseelements 107 die Kugel 106 immer im gleichem Maße zum Auslöseelement 107 mitbewegt wird. Durch die Federkraft, die auf die Kugel 106 wirkt, ist der Maximaldruck vor der Kugel 106, also im Bereich des Gaseinganges 111, begrenzbar, wobei die Federkraft groß genug gewählt werden muss um bei maximalen Regeldruck eine leckfreie Abdichtung zwischen Gaseingang 111 und den Gasausgängen 113 zu gewährleisten. Durch diese konstruktive Ausgestaltung weist das Proportionalventil 101 eine Überdruckfunktion auf und öffnet automatisch bei zu großen Drücken am Gaseingang 111. Weiters weist das Proportionalventil 101 eine Spule 114 auf, die koaxial zum Anker 104 bzw. zum Auslöseelement 107 am rohrförmigen Gehäuse 110 angeordnet ist und auf den Anker 104 wirkt. Über den mit der Spule 114 beaufschlagten Spulenstrom ist der Anker 104 proportional zur Höhe des Spulenstromes in axialer Richtung entlang des Verschiebewegs 112 verlagerbar. Ein maximaler Spulenstrom entspricht einem Verschiebeweg 112 des Ankers 104 bzw. des Auslöseelements 107 von 100% und eine nicht mit Strom beaufschlagte Spule entspricht einem Verschiebeweg 112 des Ankers 104 bzw. des Auslöseelements 107 von 0%. Bei einem Verschiebeweg 112 von 100% ist von der Kugel 106 eine maximale Durchflussfläche der Öffnung 109 freigegeben, wodurch die Durchflussmenge an Gas durch das Proportionalventil 101 maximal ist. Bei einem Verschiebeweg 112 von 0% ist die Öffnung 109 verschlossen.

Die Geometrie der Ausnehmungen 105 bildet den Zusammenhang zwischen Kugelposition, also Position des Auslöseelements 107 und der freigegebenen Durchflussfläche der Öffnung 109, also der Durchflussmenge. Durch Veränderung des Spulenstroms wird der Verschiebeweg 112 des Auslöseelements 107 bzw. der Kugel 106 entsprechend verändert, wodurch über den Spulenstrom die freigegebene Durchflussfläche der Öffnung 109 und somit die Durchflussmenge durch die Öffnung 109 eingestellt werden kann.

Darüber hinaus sind Proportionalventile bekannt, bei denen das Auslöseelement mittels eines Energiespeichers, zum Beispiel in Form einer Feder, mit dem Verschluss gekoppelt ist, um den Verschluss von der Massenträgheit des Ankers zu entkoppeln. Ein solches Proportionalventil ist zum Beispiel aus dem Patent WO 2006/122610 A1 bekannt.

Als nachteilig bei dieser Art von Proportionalventilen erweist sich die beschränkte Möglichkeit zur Einflussnahme auf die Zusammenhänge zwischen Gasdruck, Durchflussmenge, Federkraft und Magnetkraftkennlinie, was wiederum die Regelbarkeit des Proportionalventils einschränkt. Als weiters nachteilig erweist sich, dass die Federkraft immer so groß gewählt werden muss, dass eine leckfreie Abdichtung bei einem maximalen Regeldruck gewährleistet werden kann. Dies hat aber wiederum zur Folge, dass ein entsprechend starkes Magnetfeld auf den Anker aufgebracht werden muss, um die Öffnung entgegen der Federkraft zu öffnen und dadurch die Durchflussmenge zu regeln. Folglich muss die Baugröße der Spule und die Baugröße des Ankers erhöht werden, was hohe Herstellkosten des Proportionalventils nach sich zieht.

Weiterhin sind aus dem Dokument DE 10 2012 204 104 A1 ein Absperrventil, aus dem Dokument US 4,011,891 A ein vorgesteuertes Proportionalschieberventil und aus dem Dokument DE 102 45 832 A1 eine Wegeventilanordnung bekannt.

Es ist daher die Aufgabe der Erfindung, ein Proportionalventil bereitzustellen, bei dem die vorstehend angeführten Nachteile des Standes der Technik vermieden werden und bei dem die Regelbarkeit der Durchflussmenge an Gas verbessert wird.

Die vorliegende Erfindung löst diese Aufgabe durch Weiterbilden des eingangs erwähnten Proportionalventils, indem der zumindest eine Verschluss radial zum Auslöseelement im Gehäuse angeordnet wird und an einem Ende des Auslöseelements ein in Richtung des Endes zusammenlaufender Konus mit einer Konuslänge ausgebildet ist, wobei das Auslöseelement über seine äußere Mantelfläche mit dem zumindest einen Verschluss gekoppelt ist. Durch die erfindungsgemäße, konstruktiv vorteilhafte Ausgestaltung des Proportionalventils ist der Vorteil erhalten, dass die Federkraft $F_{Feder}$ nicht mehr gleich der Schließkraft $F_{Schließ}$ ist, mit der der Verschluss gegen die Öffnung drückt, sondern gemäß folgender Formel mit der Schließkraft $F_{Schließ}$ in Zusammenhang steht:

$$F_{Schließ} = \frac{F_{Feder}}{\tan(\alpha)}$$

Somit ist die Schließkraft $F_{Schließ}$, mit der der Verschluss gegen die Öffnung gedrückt wird, durch einen Konuswinkel $\alpha$ des Konus veränderbar. Je kleiner der Konuswinkel $\alpha$ ist, desto höher ist die Schließkraft $F_{Schließ}$, die, von der Feder ausgelöst, auf den Verschluss wirkt. Somit kann gegenüber dem Stand der Technik die Federkraft $F_{Feder}$ verringert werden und trotzdem eine Schließkraft $F_{Schließ}$ auf den Verschluss ausgeübt werden, die zumindest gleich oder sogar höher ist als bei Proportionalventilen nach dem Stand der Technik. Darüber hinaus erhöht sich durch den zusätzlichen veränderbaren Parameter, also den Konuswinkel $\alpha$, die Regelgenauigkeit des Proportionalventils, da mittels des Konuswinkels $\alpha$ der Zusammenhang zwischen der Magnetkraftkennlinie, der Federkraft und der lichten Querschnittsfläche der Öffnung besser an jeweilige Anwendungsfälle angepasst werden kann.

Vorteilhaft ist der Verschiebeweg größer als die Konuslänge, wodurch auch bei hohen Regeldrücken eine verhältnismäßig kleine Federkraft ausreicht, um eine leckfreie Abdichtung zwischen Gaseingang und Gasausgang zu gewährleisten. Ferner ist hierdurch der Vorteil erhalten, dass der regelbare Druckbereich vergrößert wird und dass die von dem Magneten zu leistende Arbeit verringert wird, die nötig ist um das Auslöselement und den Anker entgegen der Federkraft entlang des Verschiebeweges zu verlagern. Bevorzugt wird bei dieser Ausführungsvariante ein externes Überdruckventil vorgesehen.

Die Erfindung wird nun anhand eines Ausführungsbeispiels unter Bezugnahme auf die Zeichnungen näher beschrieben.

Figur 1 zeigt eine Schnittdarstellung einer Ausführungsvariante eines erfindungsgemäßen Proportionalventils in Vorderansicht.
Figur 2 zeigt eine Schnittdarstellung der Ausführungsvariante des erfindungsgemäßen Proportionalventils nach Figur 1 in einer Seitenansicht.
Figur 3 zeigt in Schnittdarstellung ein Beispiel für ein konventionelles Proportionalventil.
Figur 4 zeigt in Schnittdarstellung und Vorderansicht eine konventionelle Kugelführung des Proportionalventils nach Figur 3.

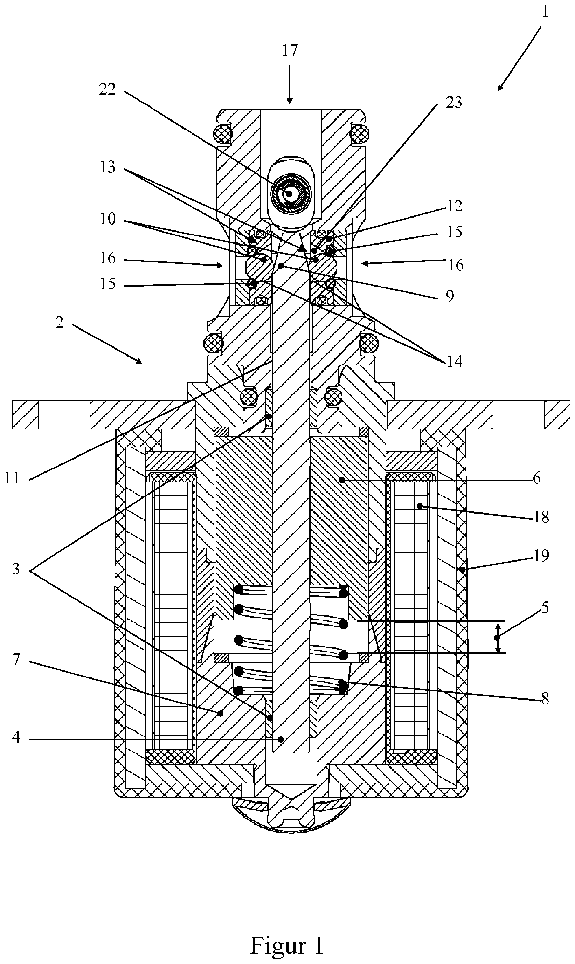

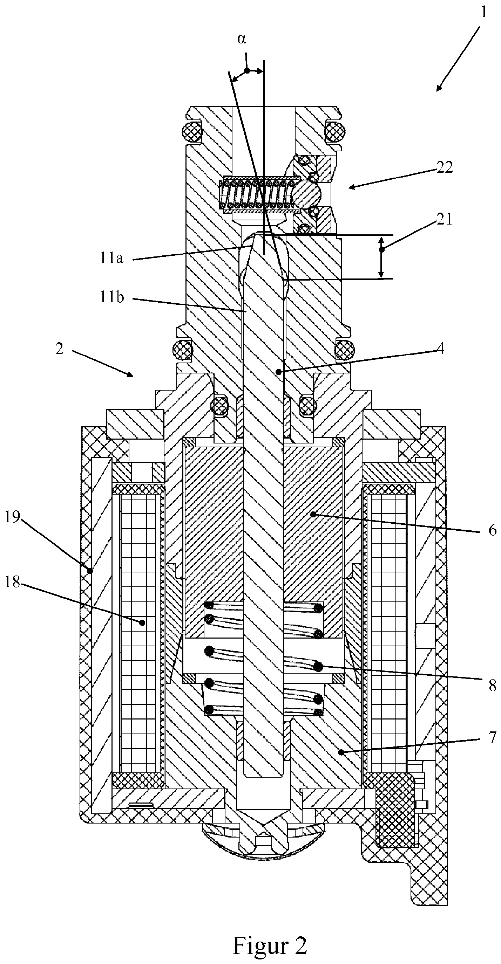

Figur 1 und Figur 2 zeigen eine Ausführungsform eines erfindungsgemäßen Proportionalventils 1. Das Proportionalventil 1 umfasst ein rohrförmiges mehrteiliges Gehäuse 2, in welchem Gehäuse 2 über Führungen 3 ein zylinderförmiges Auslöselement 4 axial verschiebbar entlang eines Verschiebeweges 5 gelagert ist. Vorteilhaft ist das Auslöselement 4 koaxial zur Längsachse des rohrförmigen Gehäuses 2 angeordnet. An dem Auslöselement 4 ist koaxial zu diesem ein Anker 6 fixiert, welcher zylinderförmig ausgebildet ist. An einem Ende des Auslöselements 4 ist ein in Richtung des Endes zulaufender Konus 9 mit einer Konuslänge 21 ausgebildet, wobei eine Mantelfläche 11 des Auslöselements in zwei Bereiche geteilt ist, nämlich in eine Mantelfläche 11a des Konus 9 und in eine Mantelfläche 11b des zylinderförmigen Teils des Auslöselements 4. Das Auslöselement 4 ist über die Mantelfläche 11a des Konus 9 mit zwei radial zu dem Auslöselement 4 angeordneten Verschlüssen gekoppelt. Die Verschlüsse sind jeweils durch Kugeln 10 gebildet, die jeweils in einem mit Kugelführungen 14 versehenen Kugelführungselement 12 gelagert sind und zum Öffnen und Schließen einer jeweiligen Öffnung 13 ausgebildet sind. Bevorzugt sind die Oberflächen der Kugeln 10 und die Oberfläche der Mantelfläche 11 des Auslöselements 4 möglichst glatt ausgeführt und gehärtet. In den Öffnungen 13 ist jeweils ein O-Ring 15 in das Kugelführungselement 12 eingepasst. In den Kugelführungen 14 sind Ausnehmungen 23 ausgebildet. Weiters sind in dem Kugelführungselement 12 zwei Gaseingänge 16 ausgebildet, die jeweils an eine Öffnung 13 angrenzen und nach außen hin reichen. Koaxial zu dem Gehäuse 2 ist an einem Ende des Gehäuse 2 ein Gasausgang 17 ausgebildet, wobei in dem Bereich des Gasausgangs 17 ein Überdruckventil 22 im Gehäuse 2 angeordnet ist. An dem anderen Ende des Gehäuses 2 ist das Gehäuse 2 als Polkern 7 ausgebildet, an welchem abstützend eine koaxial zur Längsachse des rohrförmigen Gehäuses 2 ausgerichtete Feder 8 gegen den Anker 6 wirkt. In diesem Zusammenhang ist die Feder 8 vorteilhaft durch eine Spiralfeder oder eine Scheibenfeder gebildet. Im Bereich des Polkerns 7 und des Ankers 6 ist um das rohrförmige Gehäuse 2 eine Spule 18 ausgebildet, die zum Schutz von einer Abdeckung 19 umschlossen ist.

Durch die Feder 8 werden wie in Figur 1 dargestellt die Kugeln 10 gegen die O-Ringe 15 der Öffnung 13 gedrückt, wodurch die Kugeln 10 an den O-Ring 15 dichtend anliegen und die Öffnung 13 verschließen. Die Kugeln 10 bzw. die Verschlüsse befinden sich in dieser Stellung in der Sperrstellung. Die Sperrstellung entspricht einem Verschiebeweg 5 des Auslöselements 4 bzw. des Ankers 6 von 0%. Die Feder 8 drückt wie in Figur 1 und Figur 2 dargestellt über den Anker 6, über das Auslöselement 4 und über die Mantelfläche 11a des Auslöselements 4 auf die Kugeln 10. Über einen Konuswinkel $\alpha$ des Konus 9 ist die Verschließkraft variierbar, mit der die Kugeln 10 gegen die Öffnung 13 gedrückt werden. Infolge kann je nach Einsatzgebiet des Proportionalventils 1 und somit je nach Druckbereich des zu regelnden Gases das Proportionalventil 1 mit unterschiedlichen Konuswinkel $\alpha$ ausgestattet werden. Je flacher der Konuswinkel $\alpha$, desto höher ist die Schließkraft auf die Kugeln 10 und desto höher ist der regelbare Druckbereich.

Um das Proportionalventil 1 zu öffnen wird die Spule 18 mit einem Spulenstrom beaufschlagt, wodurch diese ein Magnetfeld ausbildet. Proportional zum Spulenstrom wird der Anker 6 bzw. das Auslöseelement 4 in Richtung des Polkerns 7 entgegen der Feder 8 bewegt, wobei der maximale Spulenstrom einem Verschiebeweg 5 von 100% entspricht. Vorteilhaft wird der Verschiebeweg 5 dabei von dem Polkern begrenzt, wobei bevorzugt zwischen Anker 6 und Polkern 7 an dem Polkern 7 ein Begrenzungsring aus nicht magnetisierbarem elastischen Material angebracht ist. Ein Verschiebeweg 5 von 100% entspricht einer zur Gänze offenen Stellung der Kugeln 10 und folglich einer maximalen Durchflussmenge durch die Öffnung 13. Somit wird je nach Spulenstrom die Lage des Ankers 6 bzw. des Auslöseelements 4 entlang des Verschiebeweges 5 verändert und dabei die Durchflussmenge durch das Proportionalventil 1 verändert. Durch den Gasdruck, der an den Gaseingängen 16 herrscht, liegen die Kugeln 10 immer an der Mantelfläche 11 des Auslöseelements 4 an.

Über die geometrische Ausgestaltung der Ausnehmungen 23 kann in Abhängigkeit von dem Verschiebeweg 5 bzw. einem zum Verschiebeweg 5 über den Konuswinkel $\alpha$ proportionalen Kugelverschiebeweg der Kugel 10 in der Kugelführung 14 die Durchflussmenge durch das Proportionalventil 1 festgelegt werden. Somit kann auch bei kleinen Verschiebewegen 5 eine hohe Durchflussmenge durch das Proportionalventil 1 sichergestellt werden.

In der Ausführungsform von Figur 1 und 2 stehen die Kugeln 10 noch in Kontakt mit der Mantelfläche 11a, wenn sich die Kugeln 10 in der Sperrstellung befinden. In dieser Variante ist der Verschiebeweg 5 in etwa gleich der Konuslänge 21. Dadurch ist der Vorteil erhalten, dass bei zu starkem Gasdruck auf der Gaseingangsseite auch ohne einem externen Überdruckventil 22 eine Maximierung des Gasdrucks erreicht werden kann, da bei zu starkem Druck die Kugeln 10 über die Mantelfläche 11a des Konus 9 das Auslöseelement 4 entgegen der Feder 8 drücken, wodurch die Öffnung 13 geöffnet wird. Der Maximaldruck des Gases kann über den Konuswinkel $\alpha$ und die Federkraft eingestellt werden. Das optional angebrachte externe Überdruckventil 22 dient als zusätzlicher Schutz.

In einer weiteren Ausführungsvariante stehen die Kugeln 10 in Kontakt mit der Mantelfläche 11b, wenn sich die Kugeln 10 in der Sperrstellung befinden. In dieser Ausführungsvariante ist der Verschiebeweg 5 länger als die Konuslänge 21. Dadurch ist der Vorteil erhalten, dass auch bei geringer Federkraft und bei sehr hohen Gasdrücken die Kugeln 10 die Öffnungen 13 dichtend abschließen. Vorteilhaft ist bei dieser Ausführungsvariante ein externes Überdruckventil 22 vorgesehen.

Vorteilhaft ist die Konuslänge 21 10% länger ausgeführt, als die nötige Konuslänge 21. Hierdurch ist gewährleistet, dass bei einem Verschiebeweg 5 von 100% genug Sicherheit gegeben ist, um die Kugeln 10 in ständigen Kontakt mit der Mantelfläche 11a des Konus zu halten und somit die Kugeln 10 vor dem Herausfallen zu hindern.

Gemäß einer weiteren Ausführungsvariante sind mehr als zwei Kugeln 10 radial um das Auslöseelement 4 angeordnet. Dadurch ist der Vorteil erhalten, dass bei einem geringeren Konuswinkel $\alpha$ auch bei kleinen Verschiebewegen 5 und bei kleinen Ausnehmungen 23 eine ausreichend große Durchflussmenge gewährleistet werden kann.

Gemäß einer weiteren Ausführungsvariante ist die Mantelfläche 11a des Konus 9 konvex oder konkav ausgeführt. Hierdurch ist der Vorteil erhalten, dass die Durchflussmenge überproportional oder unterproportional zum Verschiebeweg 5 veränderbar ist. Somit ist eine maximale Variabilität des Proportionalventils 1 gegeben.

**Patentansprüche**

1. Proportionalventil (1) zur Regelung von Gasen, umfassend ein rohrförmiges Gehäuse (2), welches rohrförmige Gehäuse (2) einen Gaseingang (16) und einen Gasausgang (17) aufweist, ein Auslöseelement (4), an welchem ein Anker (6) angeordnet ist und welches axial verschiebbar in dem rohrförmigen Gehäuse (2) gelagert ist, zumindest einen mit dem Auslöseelement (4) gekoppelten Verschluss, der in einer Führung (14) zwischen einer Freigabestellung und einer Sperrstellung verlagerbar ist, wobei der Verschluss in der Freigabestellung eine im rohrförmigen Gehäuse (2) zwischen dem Gaseingang (16) und dem Gasausgang (17) ausgebildete Öffnung (13) öffnet und dadurch einen Gaspfad zwischen dem Gaseingang (16) und dem Gasausgang (17) freigibt, wobei der Verschluss in seiner Sperrstellung die Öffnung (13) verschließt und damit den Gaspfad absperrt, eine Feder (8), die an dem rohrförmigen Gehäuse (2) abstützend über den Anker (6) und das Auslöseelement (4) den Verschluss in die Sperrstellung drückt, und eine bestrombare Spule (18), welche Spule (18) auf den Anker (6) wirkt und das Auslöseelement (4) proportional zum Spulenstrom (18) entlang eines Verschiebeweges (5) verlagert, wobei der Verschluss in Abhängigkeit vom Verschiebeweg (5) die lichte Querschnittsfläche der Öffnung (13) und damit eine Gasdurchflussmenge durch den Gaspfad steuert, **dadurch gekennzeichnet, dass** der zumindest eine Verschluss radial zum Auslöseelement (4) im rohrförmigen Gehäuse (2) angeordnet ist und dass an einem Ende des Auslöseelements (4) ein in Richtung des Endes zusammenlaufender Konus (9) mit einer Konuslänge (21) ausgebildet ist, wobei das Auslöseelement (4) über seine Mantelfläche (11) mit dem zumindest einen Verschluss gekoppelt ist.

2. Proportionalventil (1) nach Anspruch 1, **dadurch gekennzeichnet, dass** bei Vorhandensein von mehreren Verschlüssen (10) diese radial um das Auslöseelement (4) herum angeordnet sind und insbesondere in gleichen Abständen radial um das Auslöseelement (4) herum angeordnet sind.

3. Proportionalventil (1) nach Anspruch 1 oder Anspruch 2, **dadurch gekennzeichnet, dass** über die Konuslänge (21) eine Schließkraft eingestellt wird, mit welcher das Auslöseelement (4), ausgelöst von der Federkraft, den zumindest einen Verschluss in die Sperrstellung drückt.

4. Proportionalventil (1) nach einem der vorherigen Ansprüche, **dadurch gekennzeichnet, dass** das Auslöseelement (4), die Feder (8) und der zumindest eine Verschluss bei einem Verschiebeweg (5) kleiner als die Konuslänge (21) und bei sich in der Sperrstellung befindlichem Verschluss ein Überdruckventil bilden.

5. Proportionalventil (1) nach Anspruch 3, **dadurch gekennzeichnet, dass** an dem Proportionalventil (1) bei einem Verschiebeweg (5) größer als die Konuslänge (21) und bei sich in der Sperrstellung befindlichem Verschluss ein externes Überdruckventil (22) vorgesehen ist.

6. Proportionalventil (1) nach einem der vorherigen Ansprüche, **dadurch gekennzeichnet, dass** der Konus (9) eine Mantelfläche (11a) aufweist, wobei die Mantelfläche (11a) des Konus (9) konkav oder konvex ausgebildet ist.

7. Proportionalventil (1) nach einem der vorherigen Ansprüche, **dadurch gekennzeichnet, dass** die Feder (8) als Spiralfeder ausgebildet ist und koaxial zur Längsachse des rohrförmigen Gehäuses (2) angeordnet ist.

8. Proportionalventil (1) nach einem der vorherigen Ansprüche, **dadurch gekennzeichnet, dass** der Anker (6) zylinderförmig ausgebildet ist und der Anker (6) und das Auslöseelement (4) koaxial zur Längsachse des rohrförmigen Gehäuses (2) angeordnet sind.

9. Proportionalventil (1) nach einem der vorherigen Ansprüche, **dadurch gekennzeichnet, dass** der zumindest eine Verschluss im Wesentlichen die Form einer Kugel aufweist oder durch eine Kugel (10) gebildet ist.

10. Proportionalventil (1) nach einem der vorherigen Ansprüche, **dadurch gekennzeichnet, dass** die Führung (14) des zumindest einen Verschlusses Ausnehmungen (23) aufweist, wobei die Durchflussmenge durch das Proportionalventil (19) durch die Konuslänge (21), den Verschiebeweg (5) und die Geometrie der Ausnehmungen (23) steuerbar ist.

## Claims

1. A proportional valve (1) for the regulation of gases, including a tubular casing (2), which tubular casing (2) has a gas inlet (16) and a gas outlet (17), a trigger element (4), at which there is arranged an anchor (6) and which is axially slidably mounted in the tubular casing (2), at least one closure coupled to the trigger element (4), which closure is movable in a guiding (14) between a release position and a locking position, wherein the closure in the release position opens an opening (13) formed in the tubular casing (2) between the gas inlet (16) and the gas outlet (17) and in this way releases a gas corridor between the gas inlet (16) and the gas outlet (17), wherein the closure in the locking position thereof closes the opening (13) and thus locks the gas corridor, a spring (8), which pushes via the anchor (6) and the trigger element (4), while being supported on the tubular casing (2), the closure into the locking position, and a coil (18) supplyable with current, which coil (18) acts on the anchor (6) and moves the trigger element (4) proportionally to the coil current (18) along a sliding path (5), wherein the closure controls the clear cross-sectional area of the opening (13) and thus a gas flow rate through the gas corridor in dependence on the sliding path (5), **characterized in that** the at least one closure is arranged radially to the trigger element (4) in the tubular casing (2) and that there is formed at one end of the trigger element (4) a cone (9) converging in the direction of the end and having a cone length (21), wherein the trigger element (4) is coupled to the at least one closure via the sheathing surface (11) thereof.

2. The proportional valve (1) according to claim 1, **characterized in that** upon presence of several closures (10) these are arranged radially about the trigger element (4) and these are arranged in particular in equal intervals radially about the trigger element (4).

3. The proportional valve (1) according to claim 1 or claim 2, **characterized in that** there is adjusted a closing force through the cone length (21), by means of which the trigger element (4), triggered by the spring force, pushes the at least one closure into the locking position.

4. The proportional valve (1) according to any of the preceding claims, **characterized in that** the trigger element (4), the spring (8) and the at least one closure form a pressure relief valve if a sliding path (5) is smaller than the cone length (21) and if the closure is in the locking position.

5. The proportional valve (1) according to claim 3, **characterized in that** there is provided an external pressure relief valve (22) on the proportional valve (1) if a sliding path (5) is larger than the cone length (21) and if the closure is in the locking position.

6. The proportional valve (1) according to any of the preceding claims, **characterized in that** the cone (9) has a sheathing surface (11a), wherein the sheathing surface (11a) of the cone (9) is configured concave or convex.

7. The proportional valve (1) according to any of the preceding claims, **characterized in that** the spring (8) is configured as a spiral spring and is arranged coaxially to the longitudinal axis of the tubular casing (2).

8. The proportional valve (1) according to any of the preceding claims, **characterized in that** the anchor (6) is configured cylindrically and the anchor (6) and the trigger element (4) are arranged coaxially to the longitudinal axis of the tubular casing (2).

9. The proportional valve (1) according to any of the preceding claims, **characterized in that** the at least one closure has essentially the shape of a sphere or is formed by a sphere (10).

10. The proportional valve (1) according to any of the preceding claims, **characterized in that** the guiding (14) of the at least one closure has recesses (23), wherein the flow amount through the proportional valve (19) may be controlled by the cone length (21), the sliding path (5) and the geometry of the recesses (23).

**Revendications**

1. Valve proportionnelle (1) pour le réglage de gaz, comportant un boîtier (2) de forme tubulaire, ledit boîtier (2) de forme tubulaire présentant une entrée de gaz (16) et une sortie de gaz (17), un élément de déclenchement (4) sur lequel est agencé un induit (6) et qui est monté axialement coulissant dans le boîtier (2) de forme tubulaire, au moins un obturateur accouplé à l'élément de déclenchement (4), qui peut être déplacé dans un guidage (14) entre une position de libération et une position de blocage, l'obturateur ouvrant, dans la position de libération, un orifice (13) réalisé dans le boîtier (2) de forme tubulaire entre l'entrée de gaz (16) et la sortie de gaz (17) et libérant ainsi un trajet gazeux entre l'entrée de gaz (16) et la sortie de gaz (17), l'obturateur fermant, dans sa position de blocage, l'orifice (13) et bloquant ainsi le trajet gazeux, un ressort (8) qui, en prenant appui sur le boîtier (2) de forme tubulaire, presse via l'induit (6) et l'élément de déclenchement (4) l'obturateur dans la position de blocage, et une bobine (18) qui peut être alimentée en courant, ladite bobine (18) agissant sur l'induit (6) et l'élément de déclenchement (4) proportionnellement au courant de bobine (18) et déplaçant l'élément de déclenchement (4) proportionnellement au courant du courant de bobine (18) le long d'une course de déplacement (5), l'obturateur commandant en fonction de la course de déplacement (5) la surface de section transversale libre de l'orifice (13) et ainsi un débit de gaz à travers le trajet gazeux, **caractérisée en ce que** ledit au moins un obturateur est agencé radialement par rapport à l'élément de déclenchement (4) dans le boîtier (2) de forme tubulaire et **en ce qu'**à une extrémité de l'élément de déclenchement (4), un cône (9) convergent en direction de l'extrémité est réalisé avec une longueur de cône (21), l'élément de déclenchement (4) étant accouplé via sa surface externe (11) audit au moins un obturateur.

2. Valve proportionnelle (1) selon la revendication 1, **caractérisée en ce qu'**en présence de plusieurs obturateurs (10), ceux-ci sont agencés radialement tout autour de l'élément de déclenchement (4) et sont agencés en particulier à des intervalles égaux radialement tout autour de l'élément de déclenchement (4).

3. Valve proportionnelle (1) selon la revendication 1 ou 2, **caractérisée en ce que** par l'intermédiaire de la longueur de cône (21) est réglée une force de fermeture avec laquelle l'élément de déclenchement (4), déclenché par la force du ressort, presse ledit au moins obturateur dans la position de blocage.

4. Valve proportionnelle (1) selon l'une des revendications précédentes, **caractérisée en ce que** l'élément de déclenchement (4), le ressort (8) et ledit au moins un obturateur forment une soupape de surpression au cas où une course de déplacement (5) est inférieure à la longueur de cône (21) et au cas où l'obturateur se trouve dans la position de blocage.

5. Valve proportionnelle (1) selon la revendication 3, **caractérisée en ce qu'**il est prévu sur la valve proportionnelle (1) une soupape de surpression (22) externe au cas où la course de déplacement (5) est supérieure à la longueur de cône (21) et au cas où l'obturateur se trouve dans la position de blocage.

6. Valve proportionnelle (1) selon l'une des revendications précédentes, **caractérisée en ce que** le cône (9) présente une surface externe (11a), la surface externe (11a) du cône (9) étant réalisée concave ou convexe.

7. proportionnelle (1) selon l'une des revendications précédentes, **caractérisée en ce que** le ressort (8) est réalisé sous forme de ressort hélicoïdal et est agencé coaxialement à l'axe longitudinal du boîtier (2) de forme tubulaire.

8. Valve proportionnelle (1) selon l'une des revendications précédentes, **caractérisée en ce que** l'induit (6) est réalisé en forme de cylindre et l'induit (6) et l'élément de déclenchement (4) sont agencés coaxialement à l'axe longitudinal du boîtier (2) de forme tubulaire.

9. Valve proportionnelle (1) selon l'une des revendications précédentes, **caractérisée en ce que** ledit au moins un obturateur présente sensiblement la forme d'une bille ou est formé par une bille (10).

10. Valve proportionnelle (1) selon l'une des revendications précédentes, **caractérisée en ce que** le guidage (14) dudit au moins un obturateur présente des évidements (23), le débit de passage à travers la valve proportionnelle (1) pouvant être commandé par la longueur de cône (21), la course de déplacement (5) et la géométrie des évidements (23).

Figur 1

Figur 2

Figur 3 (Stand der Technik)

Figur 4 (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2006122610 A1
- DE 102012204104 A1
- US 4011891 A
- DE 10245832 A1